# EUROPÄISCHE PATENTSCHRIFT

(11) **EP 4 476 611 B1**
(45) Veröffentlichungstag und Bekanntmachung des Hinweises auf die Patenterteilung: **31.12.2025**
(21) Anmeldenummer: 23733652.4
(22) Anmeldetag: 12.06.2023
(51) Int. Cl.: G06F 8/65

(54) **VERFAHREN ZUM BETREIBEN EINES KRAFTFAHRZEUGS, UM SOFTWARE-UPDATES IN MEHREREN LAUFZEITUMGEBUNGEN ZU KOORDINIEREN, SOWIE ENTSPRECHEND BETREIBBARES KRAFTFAHRZEUG**
METHOD FOR OPERATING A MOTOR VEHICLE IN ORDER TO COORDINATE SOFTWARE UPDATES IN A PLURALITY OF RUNTIME ENVIRONMENTS, AND CORRESPONDINGLY OPERABLE MOTOR VEHICLE
PROCÉDÉ POUR FAIRE FONCTIONNER UN VÉHICULE À MOTEUR AFIN DE COORDONNER DES MISES À JOUR LOGICIELLES DANS UNE PLURALITÉ D'ENVIRONNEMENTS D'EXÉCUTION, ET VÉHICULE À MOTEUR POUVANT FONCTIONNER DE MANIÈRE CORRESPONDANTE

(30) Priorität: 17.06.2022 DE 102022115201
(43) Veröffentlichungstag der Anmeldung: 18.12.2024
(73) Patentinhaber: CARIAD SE, 38440 Wolfsburg (DE)
(72) Erfinder: MEYERHÖFER, Marcus, 90542 Eckental (DE); HABERSTUMPF, Bernd, 90425 Nürnberg (DE); HÖPFNER, Marcus, 90431 Nürnberg (DE); HACK, Christian, 90431 Nürnberg (DE); HARRIES, Matthias, 91242 Ottensoos (DE)
(74) Vertreter: Hofstetter, Schurack & Partner
(86) Internationale Anmeldenummer: PCT/EP2023/065627
(87) Internationale Veröffentlichungsnummer: WO 2023/242110

(56) Entgegenhaltungen:
- EP-A1- 3 462 305
- DE-A1- 102016 206 805
- DE-A1- 102018 001 347

## Beschreibung

Die Erfindung betrifft ein Verfahren zum Betreiben eines Kraftfahrzeugs, wobei das Verfahren davon ausgeht, dass in dem Kraftfahrzeug mehrere miteinander wechselwirkende Laufzeitumgebungen, beispielsweise mehrere Betriebssysteme und/oder Auto-SAR-Laufzeitumgebungen, betrieben und aktualisiert werden müssen. Mittels des Verfahrens kann das Software-Update für die Laufzeitumgebungen derart durchgeführt werden, dass die Laufzeitumgebungen nach den Updates ohne Versionskonflikte weiterhin miteinander wechselwirken oder Daten austauschen können. Zu der Erfindung gehört auch ein Kraftfahrzeug, das gemäß dem Verfahren betrieben werden kann.

In einem Kraftfahrzeug können dessen Fahrzeugfunktionen oder Funktionalitäten durch Software-Applikationen realisiert oder implementiert sein, die auf unterschiedlichen Steuergeräten in unterschiedlichen Laufzeitumgebungen betrieben werden können. Jede Laufzeitumgebung kann ein eigenes Update-Modul, also eine Update-Software, wie beispielsweise einen so genannten Paketmanager, betreiben, der regelmäßig bei einer Update-Datenquelle eine Anfrage vornimmt, ob für die eigene Laufzeitumgebung Updates oder Update-Datenpakete vorliegen, die in der Laufzeitumgebung installiert werden sollen, oder einen entsprechenden Auftrag bzgl. eines neuen Updates erhält. Solche Update-Datenpakete können beispielsweise Fehlerbehebungen und/oder funktionale Erweiterungen bereitstellen. Dabei können sich auch Veränderungen in Datenstrukturen oder Protokollen ergeben, die von anderen Programmen berücksichtigt werden müssen. Update-Datenpakete für dieselbe Laufzeitumgebung werden dazu anhand einer Versionsangabe unterschieden, die einen jeweiligen Softwarestand oder Entwicklungsstand angibt.

Die Laufzeitumgebungen werden in einem Kraftfahrzeug nicht unabhängig voneinander betrieben, sondern durch einen Datenaustausch oder das Teilen von Daten (Datensharing) und/oder durch Kommunikation und/oder gegenseitige Funktionsaufrufe von Software-Applikationen der unterschiedlichen Laufzeitumgebungen ergibt sich insgesamt eine Wechselwirkung zwischen den Laufzeitumgebungen. Wird nun in einer der Laufzeitumgebungen ein Update durchgeführt, also durch dessen Update-Modul ein neues Update-Datenpaket installiert, das einen neuen Softwarestand aufweist, so kann es hierdurch zu einem Konflikt oder zu einer Unverträglichkeit bei der Wechselwirkung zwischen den Laufzeitumgebungen kommen. Beispielsweise kann durch ein Update-Datenpaket ein Format und/oder Protokoll für einen Datenaustausch in der Laufzeitumgebung verändert werden, die von den in Wechselwirkung stehenden übrigen Laufzeitumgebungen nicht nachvollzogen wird, wenn dort nicht gleichzeitig ebenfalls ein Update durchgeführt wird.

Bei einem Kraftfahrzeug muss deshalb darauf geachtet werden, dass Laufzeitumgebungen dahingehend versionssynchron sind, als dass alle Laufzeitumgebungen aufeinander abgestimmte Softwarestände aufweisen.

Ein Problem hierbei ist, dass die lokalen Update-Module innerhalb der Laufzeitumgebungen je nach Typ der Laufzeitumgebung oder abhängig von den zu aktualisierenden Systembestandteilen (beispielsweise Typ des Betriebssystems und/oder Typ der AutoSAR-Umgebung) unterschiedliche Update-Mechanismen vorsehen und insbesondere unterschiedliche Update-Datenquellen mit unterschiedlichen Update-Protokollen vorsehen. Somit ist es schwierig, die Update-Mechanismen aller Laufzeitumgebungen durch ein und dieselbe Update-Datenquelle zu versorgen, was es entsprechend schwierig macht, Update-Datenpakete mit aufeinander abgestimmten Softwareständen bereitzustellen oder zu forcieren.

Aus der DE 10 2016 206 805 A1 ist bekannt, das Update für mehrere Steuergeräte eines Kraftfahrzeugs dadurch in Bezug auf die Softwarestände synchron zu halten, dass nur ein einzelnes Fahrzeug-Updatepaket geschnürt oder vorbereitet wird, das in das Kraftfahrzeug heruntergeladen und dort auf die Steuergeräte verteilt wird. Dies erfordert es aber, dass ein Fahrzeug-Updatepaket mit großem Datenvolumen in einem Steuergerät zwischengespeichert werden muss, was entsprechende Ressourcen in dem Kraftfahrzeug erfordert.

Aus der DE 10 2018 001 347 A1 ist bekannt, dass in einem Kraftfahrzeug mehrere Übertragungseinrichtungen vorgesehen werden können, um Update-Datenpakete für einzelne Steuergeräte getrennt voneinander beschaffen zu können. Die Übertragungseinrichtungen müssen allerdings in die jeweiligen Laufzeitumgebungen eingreifen können, damit sie dort auch die Installation vornehmen können. Hierdurch ist der Aufwand beim Implementieren einer Laufzeitumgebung in das Kraftfahrzeug mit einem entsprechenden Anpassungsbedarf verknüpft. Es kann keine Laufzeitumgebung "out of the box" verwendet werden.

Aus der EP 3 462 305 A1 ist bekannt, zentral von einem Steuergerät aus in einem Kraftfahrzeug Update-Datenpakete auf mehrere Steuergeräte zu verteilen und dort zu installieren, und hierzu ein jeweiliges Update-Modul aus dem zentralen Steuergerät in dem jeweiligen Steuergerät zu installieren, damit dort vor Ort die Installation durchgeführt werden kann. Diese Lösung erfordert in dem zentralen Steuergerät einen großen Datenspeicher, um bei einem Update für mehrere Steuergeräte die Update-Datenpakete aller Steuergeräte zentral speichern zu können.

Der Erfindung liegt die Aufgabe zugrunde, in einem Kraftfahrzeug mehrere Laufzeitumgebung versionssynchron halten zu können, damit das Wechselwirken zwischen den Laufzeitumgebungen ohne Versionskonflikte ablaufen kann.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figuren beschrieben.

Als eine Lösung umfasst die Erfindung ein Verfahren zum Betreiben eines Kraftfahrzeugs. Das Verfahren geht davon aus, dass in dem Kraftfahrzeug in mehreren in der beschriebenen Weise miteinander wechselwirkenden Laufzeitumgebungen jeweils ein lokales Update-Modul betrieben wird. Ein solches Update-Modul ist in der Regel Teil der Standard-Ausstattung einer Laufzeitumgebung, also intern in der Laufzeitumgebung vorhanden. Die Laufzeitumgebungen können insgesamt gemeinsam in einem Steuergerät des Kraftfahrzeugs oder in mehreren unterschiedlichen Steuergeräten des Kraftfahrzeugs installiert sein. Die Laufzeitumgebungen stehen miteinander in Wechselwirkung, das heißt, sie beeinflussen und/oder steuern sich gegenseitig durch einen Datenaustausch, durch ein Daten-Sharing, durch Kommunikation untereinander (mittels ihrer Software-Applikationen) und/oder durch gegenseitige Funktionsaufrufe (IPC - inter process communication), wie dies beispielsweise bei dem Mechanismus RPC (Remote Procedure Call) der Fall ist.

In der jeweiligen Laufzeitumgebung lädt deren Update-Modul aus einer jeweiligen umgebungsspezifischen Update-Datenquelle ein oder mehrere Update-Datenpakete eines jeweiligen neuen Softwarestands (also einer neuen Software-Version und/oder einer neuen Softwaresammlung) herunter. Mit anderen Worten kann das Update-Modul ohne eine spezifische Anpassung ausgestaltet bleiben, da das Update-Modul sich an die für die Laufzeitumgebung vorgesehene umgebungsspezifische Update-Datenquelle wenden kann. Mit "umgebungsspezifisch" ist hierbei gemeint, dass die Update-Datenquelle für das Herunterladen und/oder für das Melden eines neuen Update-Datenpakets ein für die Laufzeitumgebung jeweils vorgesehenes Protokoll zur Kommunikation und/oder Datenübertragung vorsehen kann. Beispielsweise kann als Update-Modul in der Laufzeitumgebung ein so genannter Paket-Manager betrieben werden, wobei sich die Update-Module der unterschiedlichen Laufzeitumgebungen in Bezug auf Ausgestaltung und/oder Protokoll unterscheiden können. Für jedes Update-Modul wird eine umgebungsspezifische, also von dem Update-Modul benötigte und entsprechend ausgestaltete Update-Datenquelle bereitgestellt. Somit kann das jeweilige lokale Update-Modul einer Laufzeitumgebung mit dem heruntergeladenen Update-Datenpaket in der Laufzeitumgebung eine lokale Update-Routine durchführen. Aus Sicht der Laufzeitumgebung ist somit keinerlei Anpassung notwendig oder anders herum wird die Laufzeitumgebung derart betrieben, wie es auch unabhängig von dem Steuergerät und/oder unabhängig von dem Kraftfahrzeug für die Laufzeitumgebung vorgesehen ist. Insbesondere muss das jeweilige Update-Modul keiner der Laufzeitumgebungen an einen Update-Mechanismus einer anderen der Laufzeitumgebungen angepasst oder in Bezug auf das verwendete Protokoll angepasst oder angeglichen werden.

Falls nach Abschluss aller Updates eine vorbestimmte Prüfroutine in dem Kraftfahrzeug eine fehlerfreie Durchführung der jeweiligen Update-Routine der Laufzeitumgebungen signalisiert, wird die jeweilige Laufzeitumgebung mit dem neuen Softwarestand in Betrieb genommen. Da alle Laufzeitumgebungen ihr Update-Datenpaket erhalten und gemäß der Prüfroutine erfolgreich installiert haben, also deren Update-Routine erfolgreich durchlaufen wurde, starten die Laufzeitumgebungen wieder alle mit koordiniertem oder synchronem Softwarestand. Somit ist ein Versionskonflikt bei dem Wechselwirken der Laufzeitumgebungen vermieden.

Um nun in dieser Umgebung für jede Laufzeitumgebung sicherzustellen, dass ihr Update-Modul überhaupt trotz unabhängiger oder eigenständiger Kommunikation mit der umgebungsspezifischen Update-Datenquelle dennoch mit allen übrigen Laufzeitumgebungen ihr Update versionssynchron durchführt, ist erfindungsgemäß vorgesehen, dass in dem Kraftfahrzeug durch ein zentrales Steuermodul aus einem fahrzeugexternen Backend-Server Konfigurationsdaten empfangen werden, die für die Laufzeitumgebungen abgestimmte Softwarestände angeben, also z.B. die jeweils notwendige Software-Version für einen versionssynchronen Softwarestand, damit die Wechselwirkung ohne Versionskonflikt abläuft. Der Backend-Server kann beispielsweise ein stationärer Server aus einem Computer oder einem Computerverbund sein. Der Backend-Server kann mit dem zentralen Steuermodul beispielsweise über eine Internetverbindung und/oder eine Funkverbindung (beispielsweise Mobilfunk und/oder WLAN - Wireless Local Area Network) kommunizieren.

In dem zentralen Steuermodul ist somit bekannt, welchen Softwarestand jede Laufzeitumgebung aufweisen muss, damit insgesamt alle Laufzeitumgebungen versionssynchron sind oder fehlerfrei miteinander wechselwirken können.

In dem Kraftfahrzeug werden zusätzlich mehrere unterschiedliche Servermodule bereitgestellt, also lokale, in dem Kraftfahrzeug betriebene Software, die jeweils als Server ausgestaltet ist, um jeweils als eine lokalen Update-Datenquelle zu fungieren. Jedes Servermodul ist für eine der Laufzeitumgebungen oder einige der Laufzeitumgebungen zuständig. Dies bedeutet, dass jedem Servermodul eine oder einige der Laufzeitumgebungen zugeordnet sind und das Servermodul ist für die zugeordneten Laufzeitumgebungen auf das jeweilige Update-Modul derjenigen Laufzeitumgebung, die ihm zugeordnet ist, abgestimmt. Es können mehrere Laufzeitumgebungen einem Servermodul zugeordnet sein, wenn es sich z.B. um gleichartige Laufzeitumgebungen (beispielsweise der gleiche Betriebssystemtyp) handelt. Ein solches Servermodul stellt also einen lokalen, im Kraftfahrzeug betriebenen Update-Server oder eine Update-Datenquelle dar, die mit der jeweiligen Laufzeitumgebung korrespondiert. Wird beispielsweise als Laufzeitumgebung ein Linux-Betriebssystem betrieben, so kann entsprechend als Servermodul eine Linux-Update-Datenquelle bereitgestellt sein. Beispielsweise kann das Servermodul in Bezug auf den Paket-Manager an einen Paket-Manager der zugeordneten Laufzeitumgebung angepasst sein oder einen solchen ebenfalls betreiben.

Das zentrale Servermodul steuert das jeweilige Servermodul an, damit das jeweilige Servermodul das Update-Datenpaket oder die Update-Datenpakete des jeweiligen Softwarestands gemäß den Konfigurationsdaten für die jeweilige zugeordnete Laufzeitumgebung aus einer fahrzeugexternen Datenquelle herunterlädt. Mit anderen Worten stellt jedes Servermodul einen Zwischenspeicher dar, der selbsttätig gemäß den Konfigurationsdaten das Update-Datenpaket in demjenigen Softwarestand oder in derjenigen Software-Version aus der fahrzeugexternen Datenquelle beschafft oder herunterlädt, die gemäß den Konfigurationsdaten für die zugeordnete Laufzeitumgebung notwendig ist. Nun wird das jeweilige Servermodul als fahrzeuginterne Update-Datenquelle für die jeweilige zugeordnete Laufzeitumgebung betrieben. Mit anderen Worten greift das Update-Modul der jeweiligen Laufzeitumgebung auf einen Update-Server als Update-Datenquelle zu, der nicht fahrzeugextern beispielsweise im Internet vorhanden ist oder betrieben wird, sondern das Servermodul imitiert oder simuliert einen solchen Update-Server und wirkt damit als fahrzeuginterne Update-Datenquelle. Aus Sicht der jeweiligen Laufzeitumgebung ergibt sich kein Unterschied für die Update-Routine, da das Update-Modul in der üblichen Weise über eine Netzwerkverbindung mit einer Update-Datenquelle kommuniziert, nur dass gemäß dem Verfahren diese Update-Datenquelle durch ein fahrzeuginternes Servermodul betrieben wird. Da alle Servermodule durch das zentrale Steuermodul dahingehend vorbereitet sind, dass sie als Update-Datenpakete solche Versionsstände bereithalten, die gemäß den Konfigurationsdaten aufeinander abgestimmt sind, laden alle Laufzeitumgebungen mittels ihres lokalen Update-Moduls die für die fehlerfreie Wechselwirkung der Laufzeitumgebung benötigten Softwarestände herunter und installieren diese. Dies ergibt die Koordination der Updates.

Durch die Erfindung ergibt sich der Vorteil, dass für die Laufzeitumgebungen keine Anpassung ihres Update-Mechanismus oder ihrer Update-Routinen notwendig ist, und dennoch alle Laufzeitumgebungen (ohne selbst eine Koordination untereinander vornehmen zu müssen) mit Update-Datenpaketen versorgt werden, die untereinander durch das zentrale Steuermodul mittels der Konfigurationsdaten aufeinander abgestimmt sind. Hierfür sorgt die Entkopplung der Laufzeitumgebungen von den fahrzeugexternen Datenquellen, beispielsweise Herstellern der einzelnen Laufzeitumgebungen. Stattdessen wird sichergestellt, dass die Laufzeitumgebungen auf fahrzeuginterne Servermodule zugreifen, die mittels der Konfigurationsdaten durch das zentrale Steuermodul aufeinander abgestimmt sind. Das zentrale Steuermodul und die Servermodule können beispielsweise jeweils als eine Software in dem Kraftfahrzeug betrieben oder implementiert sein.

Die Erfindung umfasst auch Weiterentwicklungen, durch die sich zusätzliche Vorteile ergeben.

Um zu verhindern, dass eine Laufzeitumgebung standardmäßig doch bei der fahrzeugexternen Datenquelle um Update-Datenpakete anfragt oder von diesem benachrichtigt wird, wie dies für Laufzeitumgebungen, wie beispielsweise Betriebssysteme (zum Beispiel Linux ^{™} und/oder Windows ^{™} und/oder RTOS ^{™}) der Fall ist, ist gemäß einer Weiterentwicklung vorgesehen, dass das jeweilige Update-Modul ausschließlich bei dem lokalen Servermodul, dem es zugeordnet ist, anfragt oder von diesem benachrichtigt wird. Dies kann beispielsweise dadurch erreicht werden, dass in dem Update-Modul der jeweiligen Laufzeitumgebung als Netzwerkadresse oder IP-Adresse (IP - Internet Protocol) diejenige des lokalen Servermoduls eingetragen ist. Mit anderen Worten "kennt" das jeweilige Update-Modul nur das lokale Servermodul als Update-Datenquelle. Somit fragt das jeweilige lokale Update-Modul jeder Laufzeitumgebung nur bei dem lokalen Servermodul an, ob ein neuer Softwarestand und/oder welcher neue Softwarestand verfügbar ist, und bei gegebener Verfügbarkeit wird dann das jeweilige Update-Datenpaket aus dem lokalen Servermodul heruntergeladen und für die Installation bereitgehalten. Insbesondere ist hierbei bevorzugt vorgesehen, dass die Installation nicht in der Laufzeitumgebung automatisiert gestartet wird, sondern eine Abhängigkeit zwischen den Laufzeitumgebungen geschaffen wird, damit die Updates oder die Installationen der jeweiligen Update-Datenpakete synchron oder koordiniert verlaufen.

Eine Weiterentwicklung sieht hierzu vor, dass die lokalen Update-Routinen der Laufzeitumgebungen in Abhängigkeit von einem Freigabesignal des zentralen Steuermoduls gestartet werden. Beispielsweise kann das Steuermodul abwarten, bis alle Servermodule ein Bestätigungssignal oder ein Bereitschaftssignal an das zentrale Steuermodul senden, mit welchem die Servermodule signalisieren, dass sie erfolgreich das jeweilige Update-Datenpaket aus ihrer jeweiligen fahrzeugexternen Datenquelle beschaffen konnten oder herunterladen konnten, und es für das Herunterladen durch das jeweilige Update-Modul der Laufzeitumgebungen bereitsteht. Somit ist in dem zentralen Steuermodul bekannt, dass bei Freigeben der Auslösen der Update-Routinen in den Laufzeitumgebungen für jede Laufzeitumgebung das jeweils vorgesehene Update-Datenpaket verfügbar ist.

Durch die Installation eines Update-Datenpakets kann eine Verfügbarkeit einer Laufzeitumgebung beeinträchtigt werden, das heißt, die jeweilige Laufzeitumgebung sollte sich nicht im Betrieb befinden und/oder für die Fahrzeugführung benötigt werden. Entsprechend sieht eine Weiterentwicklung vor, dass das zentrale Steuermodul das Freigabesignal zum Starten der Update-Routinen nur erzeugt, falls erkannt wird, dass sich das Kraftfahrzeug in einer Parkphase befindet oder eine Parkphase bevorsteht. Eine Parkphase ist insbesondere ein solcher Zustand des Kraftfahrzeugs, bei welchem ein Fahrbetrieb unmöglich ist, weil das Kraftfahrzeug dahingehend ausgeschaltet ist, dass es nicht durch einen Fahrzeugführer gesteuert werden kann. Insbesondere ist also beispielsweise die Zündung des Kraftfahrzeugs ausgeschaltet. Eine Parkphase kann auch dadurch definiert sein, dass in dem Steuermodul bekannt ist oder ermittelt wird, dass das Kraftfahrzeug in dem Zustand für eine vorbestimmte Mindestzeitdauer verharren wird. Dies kann beispielsweise auf Grundlage von Nutzungsdaten oder einem Nutzungsprofil eines Besitzers oder eines Benutzers des Kraftfahrzeugs ermittelt werden. Zusätzlich oder alternativ dazu kann auch ein Nutzer des Kraftfahrzeugs während einer Betriebsphase oder eines Fahrbetriebs des Kraftfahrzeugs über das bevorstehende Update informiert werden und von dem Benutzer eine Bestätigung oder eine Eingabe gefordert werden, mittels welcher der Benutzer bestätigt, dass er das Kraftfahrzeug für die vorbestimmte Mindestzeitdauer nicht benutzen wird. Das Kraftfahrzeug kann dann durch das zentrale Steuermodul für einen Betrieb gesperrt werden, beispielsweise kann die Zündung deaktiviert werden. Somit ist verhindert, dass während der Durchführung der Update-Routinen ein Nutzer spontan doch versuchen könnte, das Kraftfahrzeug in Betrieb zu nehmen. Indem das Freigabesignal nur für eine Parkphase erzeugt wird, ist sichergestellt, dass das Kraftfahrzeug keinen Fahrbetrieb durchführt oder durchführen muss, während die Update-Routinen durchlaufen werden.

Eine Weiterentwicklung berücksichtigt, dass die Parkphase, während welcher die Update-Routinen nur durchlaufen werden können, möglichst effizient genutzt werden sollte, das heißt, alle bereits im Voraus durchführbaren Verfahrensschritte sollten vor der Parkphase abgeschlossen sein. Entsprechend ist vorgesehen, dass das Herunterladen der Update-Datenpakete aus der jeweiligen fahrzeugexternen Datenquelle durch die Servermodule während eines Fahrbetriebs des Kraftfahrzeugs durchgeführt wird. Dieser Teil des Updates ist somit noch durchführbar, während die Laufzeitumgebungen in Betrieb sind und am Fahrbetrieb des Kraftfahrzeugs beteiligt sind. Somit ergibt sich kein Zeitverlust in der Parkphase, wie er ansonsten durch das Herunterladen aus den fahrzeugexternen Datenquellen vorhanden wäre. Wie später noch erläutert werden wird, kann auch vor der Parkphase, also z.B. im Fahrbetrieb, bereits ein Abspeichern oder sogar eine Installation des Update-Datenpakets in einer inaktiven Partition erfolgen. Eine währenddessen aktiv geschaltete Partition kann auf dem bisherigen Softwarestand weiterbetrieben werden.

Nachdem alle Installationsroutinen oder Update-Routinen durchlaufen sind, kann jedes Update-Modul in der jeweiligen Laufzeitumgebung für sich feststellen, ob das Update erfolgreich war, ob also das jeweilige Update-Datenpaket funktionsfähig in der Laufzeitumgebung installiert wurde. Falls es in einer Laufzeitumgebung zu einem Fehler oder einem Abbruch der Update-Routine kam, dürfen auch die übrigen Laufzeitumgebungen nicht mit ihrem neuen Update-Datenpaket, also mit ihrem neuen Softwarestand in Betrieb gehen, da zumindest eine Laufzeitumgebung (diejenige mit dem Fehler in der Update-Routine) noch auf dem alten Versionsstand ist. Um einen solchen fehlerhaften Zustand zu vermeiden, sieht eine Weiterentwicklung vor, dass die besagte Prüfroutine zum Freischalten des neuen Versionsstands oder des neuen Softwarestands umfasst, dass das zentrale Steuermodul ermittelt, dass aus jeder Laufzeitumgebung ein Bestätigungssignal der jeweiligen lokalen Update-Module aus den Laufzeitumgebungen eine fehlerfreie Durchführung der jeweiligen Update-Routine signalisiert und ein entsprechendes Bestätigungssignal empfangen wird. Somit ist in dem zentralen Steuermodul bekannt, dass von allen betroffenen Laufzeitumgebungen, die gemäß den Konfigurationsdaten ein Update durchführen sollen, dies auch erfolgreich getan haben. Nur falls alle lokalen Durchführungen als fehlerfrei signalisiert werden, wird durch das zentrale Steuermodul insgesamt eine fehlerfreie Durchführung signalisiert und somit der neue Softwarestand in Betrieb genommen. Andernfalls wird die Inbetriebnahme des neuen Softwarestands blockiert, indem beispielsweise der vorangehende Softwarestand rekonstruiert oder beibehalten wird und dieser in Betrieb geht.

Falls die Update-Routine vorsieht, dass eine Bereinigung und Installation von Software-Anteilen in der Laufzeitumgebung auf Grundlage des Update-Datenpaketes erfolgt, müssen die ausgetauschten Software-Anteile wieder rekonstruiert werden. Hierzu können diese temporär zwischengespeichert werden. Eine Weiterentwicklung sieht dagegen vor, dass das jeweilige Update-Datenpaket durch die Update-Routine in einer inaktiven Partition der Laufzeitumgebung installiert wird. Die Laufzeitumgebung ist somit zweimal verfügbar, einmal in einer aktiven Partition, wo der aktuelle Softwarestand installiert ist, und in einer inaktiven Partition, in welcher die Update-Routine das Update-Datenpaket installiert. Währenddessen kann also ein aktuell installierter und bisher genutzter Softwarestand als ausführbar beibehalten werden. Wird dann durch das zentrale Steuermodul erkannt, dass nicht alle Update-Routinen fehlerfrei oder erfolgreich durchlaufen wurden, so kann die bisherige aktive Partition weiter genutzt werden. Ansonsten kann auf die bis dahin inaktive Partition umgeschaltet werden, so dass beim Start des Kraftfahrzeugs oder des jeweiligen Steuergeräts oder der jeweiligen Laufzeitumgebung auf der nun aktiv geschalteten Partition der neue Softwarestand verfügbar ist.

Allgemein ist bevorzugt vorgesehen, dass das Herunterladen der Update-Datenpakete und deren Installation in mehrere Phasen eingeteilt ist, deren Übergang oder Schnittstelle für alle Laufzeitumgebungen durch das zentrale Steuermodul gemeinsam eingeleitet oder ausgelöst wird. Mit anderen Worten warten alle Laufzeitumgebungen oder alle Update-Module der Laufzeitumgebungen, bis sie ein Auslösesignal durch das zentrale Steuermodul erhalten, um die jeweils nächste Phase zu beginnen oder einzuleiten. Somit hat das zentrale Steuermodul Kontrolle darüber, wann die einzelnen Update-Module in den Laufzeitumgebungen mit der nächsten Phase beginnen. Hierdurch ergibt sich eine zeitliche Koordination der Update-Module.

In Bezug auf die Anordnung der Servermodule in Bezug auf die von diesen versorgten oder diesen zugeordneten Laufzeitumgebungen wird bevorzugt jedes Servermodul so nahe wie möglich und/oder über eine möglichst schnelle Datenanbindung mit der Laufzeitumgebung gekoppelt. Hierdurch wird vermieden, dass Zeit während der Parkphase beim Herunterladen und Installieren verloren geht. Gemäß einer Weiterentwicklung ist zumindest eines der Servermodule in demselben Steuergerät, in welchem auch die jeweils ihm zugeordnete Laufzeitumgebung angeordnet ist, betrieben. Mit anderen Worten betreibt das Steuergerät sein eigenes Servermodul für zumindest eines seiner Laufzeitumgebungen oder für seine Laufzeitumgebung. Ein Servermodul kann aber auch in dem zentralen Servermodul betrieben werden, was im Zusammenhang mit der Erfindung insbesondere für solche Laufzeitumgebungen vorgesehen ist, die nicht die Kapazität für ein eigenes Servermodul aufweisen. Dies kann beispielsweise für Steuergeräte sein, die lediglich einen Sensor und/oder Aktuator steuern, also ein verhältnismäßig kleines Steuergerät. Zumindest ein Servermodul kann außerhalb des Steuergeräts, das die zugeordnete Laufzeitumgebung aufweist, betrieben werden, wird dann aber bevorzugt derart in einem Datennetzwerk mit dem Steuergerät angebunden, dass es die schnellste Datenverbindung zu diesem Steuergerät aufweist. Das Servermodul kann in einem anderen Steuergerät betrieben werden, wobei die beiden Steuergerät dann über das Datennetzwerk, beispielsweise ein Ethernet, gekoppelt sein können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Als weitere Lösung umfasst die Erfindung auch das Kraftfahrzeug, das gemäß dem Verfahren betrieben wird oder dazu ausgelegt ist, gemäß dem Verfahren betrieben zu werden. Entsprechend weist das Kraftfahrzeug eine Prozessorschaltung auf, die das zentrale Steuermodul aufweist, sowie mehrere Steuergeräte mit jeweils zumindest einer Laufzeitumgebung mit eigenem Update-Modul und dadurch mit eigener integrierter Update-Routine, sowie zumindest ein Steuergerät, das ein Servermodul aufweist. Das Steuergerät mit Servermodul kann auch dasjenige für eine Laufzeitumgebung sein, wenn Servermodul und zugehörige oder zugeordnete Laufzeitumgebung im selben Steuergerät integriert werden können. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Prozessorschaltung und das jeweilige Steuergerät kann hierzu jeweils zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung und das jeweilige Steuergerät jeweils Programmcode aufweisen, der dazu eingerichtet ist, bei Ausführen insgesamt (durch Prozessorschaltung und das jeweilige Steuergeräte) die Ausführungsform des erfindungsgemäßen Verfahrens durchzuführen. Der Programmcode kann in einem jeweiligen Datenspeicher der Prozessorschaltung bzw. des jeweiligen Steuergeräts gespeichert sein.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs, in welchem eine Ausführungsform des erfindungsgemäßen Verfahrens durchgeführt werden kann; und
- Fig. 2: eine Skizze zur Veranschaulichung einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

**In** den Figuren bezeichnen gleiche Bezugszeichen jeweils funktionsgleiche Elemente.

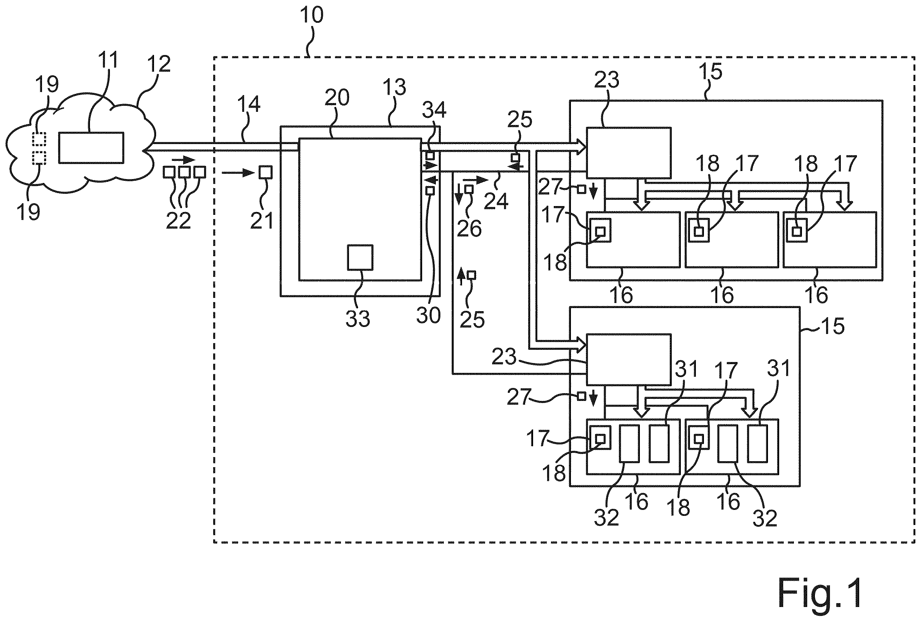

Fig. 1 zeigt ein Kraftfahrzeug 10, bei dem es sich um einen Kraftwagen, insbesondere um einen Personenkraftwagen oder Lastkraftwagen, handeln kann. Des Weiteren ist ein Backend-Server 11 dargestellt, der als ein Server des Internets 12 ausgestaltet sein kann. Der Backend-Server 11 kann mit einem Steuergerät 13 des Kraftfahrzeugs 10 über eine Kommunikations- /Datenverbindung 14 gekoppelt sein, die auf einer Internetverbindung und/oder einer Funkverbindung, beruhen kann. In dem Kraftfahrzeug 10 können weitere Steuergeräte 15 bereitgestellt sein, in denen jeweils eine oder mehrere Laufzeitumgebungen 16 betrieben werden oder installiert sein können. Die Laufzeitumgebungen 16 können beispielsweise jeweils als eine virtuelle Maschine oder ein so genannter Container implementiert sein, um nur Beispiele zu nennen. Jede Laufzeitumgebung 16 kann ein Betriebssystem umfassen, beispielsweise ein Linux-Betriebssystem und/oder ein Echtzeit-Betriebssystem, oder eine Auto-SAR-Laufzeitumgebung sein. Insbesondere können die Laufzeitumgebungen 16 unterschiedlich ausgestaltet sein. Die Laufzeitumgebungen 16 müssen in dem Kraftfahrzeug 10 derart aufeinander abgestimmt sein, dass jeweilige Softwarestände oder Software-Versionen von Software oder Programmen der Laufzeitumgebungen 16 zueinander passen oder aufeinander abgestimmt sind, damit beispielsweise ein Datenaustausch zwischen Applikationssoftware der Laufzeitumgebungen 16 in einem korrekten oder einheitlichen Format übertragen werden. In jeder Laufzeitumgebung 16 kann ein Update-Modul 17 vorhanden sein, welches eine jeweilige für die Laufzeitumgebungen 16 spezifische Update-Routine 18 aufweisen kann. Würde man nun die Laufzeitumgebungen 16 mit ihren Update-Modulen 17 direkt mit dem Internet 12 koppeln, so würde jede Laufzeitumgebung 16 bei einem jeweiligen eigenen Internetserver 19, beispielsweise einem Internetserver 19 eines Herstellers der jeweiligen Laufzeitumgebung 16, eigene Update-Datenpakete beziehen und jede Laufzeitumgebung 16 unabhängig von den übrigen Laufzeitumgebungen 16 zu unterschiedlichen Zeitpunkten ein Update durchführen, um einen Versionsstand oder eine Software-Version aktuell zu halten. Hierdurch könnte aber die Synchronität oder die Abstimmung der Laufzeitumgebungen 16 untereinander gestört oder verloren werden.

Dies ist bei dem Kraftfahrzeug 10 verhindert. Hierzu kann in dem Steuergerät 13 ein zentrales Steuermodul 20 vorgesehen sein, das aus dem Backend 11 Konfigurationsdaten 21 empfangen kann, die angeben, welche Kombination aus Softwareständen von Update-Datenpaketen 22, also welche Softwarestände oder Software-Versionen von Datenpaketen 22 aufeinander abgestimmt sind und für ein gemeinsames Update der Laufzeitumgebungen 16 geeignet sind. Anhand der Konfigurationsdaten 21 kann das Steuermodul 20 lokale Servermodule 23 ansteuern, die beispielsweise in dem jeweiligen Steuergerät 15 für die in dem Steuergerät 15 betriebenen Laufzeitumgebungen 16 bereitgestellt werden. Jedes Servermodul 23 kann gemäß den Konfigurationsdaten 21 sich dann die Update-Datenpakete 22 mit dem korrekten Softwarestand oder in der korrekten Software-Version beschaffen, wie sie beispielsweise durch den Backend-Server 11 bereitgestellt werden können. In dem Backend-Server 11 können die Update-Datenpakete 22 beispielsweise aus dem Server 19 beschafft werden, wobei aber gezielt aufeinander abgestimmte Software-Bestände beschafft werden können.

Meldet dann jedes Servermodul 23 über einen Kontrollkanal 24 mittels eines Bereitschaftssignals 25, dass alle benötigten Update-Datenpakete 22 gemäß den Konfigurationsdaten 21 in dem Servermodul 23 für eine Installation bereitstehen, so kann durch das Steuermodul 20 abgewartet werden, bis das Kraftfahrzeug 10 in einem für das Update sicheren Zustand gebracht worden ist, beispielsweise in eine Parkphase. Zu Beginn der Parkphase, wenn ein Benutzer des Kraftfahrzeugs 10 aussteigen möchte oder das Kraftfahrzeug 10 abschalten möchte, kann eine Bestätigung von dem Benutzer erfragt werden, dass dieser das Kraftfahrzeug 10 für eine vorbestimmte Mindestzeitdauer unbenutzt lassen wird. Der Fahrer oder der Benutzer des Kraftfahrzeugs 10 kann somit das Durchführen des Updates während seiner Abwesenheit bestätigen oder freigeben.

Liegt dann die Parkphase vor, so kann das Steuermodul 20 ein Freigabesignal 26 beispielsweise über den Kontrollkanal 24 an die Servermodule 23 geben, damit diese das Update auslösen. Die Servermodule 23 können dann beispielsweise über einen Kontrollkanal 27 die Update-Module 17 über das Vorliegen eines aktuellen oder zu installierenden Update-Datenpakets 22 für die jeweilige Laufzeitumgebung 16 informieren. Das jeweilige Update-Modul 17 kann dann seine Update-Routine 18 starten und hierbei aber das Beziehen oder Anfragen der Update-Datenpakete 22 auf das jeweilige Servermodul 23 beschränken, das heißt, für die Update-Module 17 besteht kein Zugang zu dem Server 19. Stattdessen simulieren die Servermodule 23 einen jeweiligen Server für Update-Datenpakete. Da alle Servermodule 23 mit aufeinander abgestimmten Update-Datenpaketen 22 ausgestattet sind, kann nach Installieren der Update-Datenpakete sichergestellt sein, dass die Laufzeitumgebungen 16 in Bezug auf ihren Softwarestand oder ihre Software-Versionen weiterhin aufeinander abgestimmt sind. Bestätigt dann das jeweilige Update-Modul mittels eines jeweiligen Bestätigungssignals 30 an das Steuermodul 20, dass es ein erfolgreiches Update durchführen konnte oder die Update-Routinen 18 erfolgreich durchlaufen wurden, so ist in dem Steuermodul 20 verifiziert, dass bei erneuter Inbetriebnahme des Kraftfahrzeugs 10 alle Laufzeitumgebungen 16 aufeinander abgestimmte Softwarestände gemäß den Konfigurationsdaten 21 aufweisen. Um für den Fall, dass das Bestätigungssignal 30 einer Laufzeitumgebung 16 ausbleibt, einen Rücksprung oder eine Rückabwicklung des Updates durchführen zu können, kann eine Laufzeitumgebung eine Kopie ihrer selbst in einer jeweiligen inaktiven Partition 31 beinhalten, also beispielsweise eine Festplattenpartition oder einen Container, in welchem das Update mittels der Update-Datenpakete 22 zunächst durchgeführt wird. Erst wenn die Update-Routinen 18 in den Update-Modulen 17 durchlaufen wurden, kann von einer aktuellen aktiven Partition 32, also beispielsweise einem Dateisystem mit dem aktuellen Softwarestand, auf die bis dahin inaktive Partition 31, also einem Dateisystem mit dem neuen Softwarestand, umgeschaltet werden, und damit die Laufzeitumgebung 16 gestartet oder gebootet werden. Andernfalls kann die bisher genutzte Partition 32 beibehalten werden beim Start der jeweiligen Laufzeitumgebung 16.

Damit sich in dieser Hinsicht alle Laufzeitumgebungen 16 gleichartig verhalten, kann durch eine Prüfroutine 33, die zumindest teilweise in dem Steuermodul 20 implementiert sein kann, die fehlerfreie Durchführung aller durch ein Update-Datenpaket betroffenen Laufzeitumgebungen anhand des Bestätigungssignals 30 erfolgen und dann ein Umschaltsignal 34 zum Umschalten auf den jeweiligen neuen Softwarestand freigegeben oder genehmigt werden.

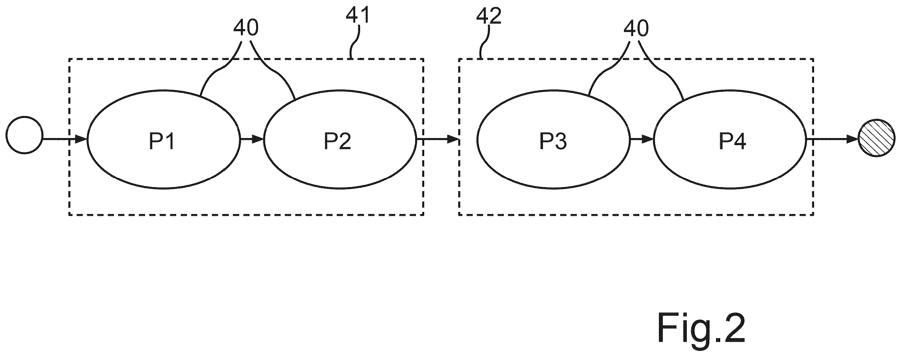

Fig. 2 veranschaulicht, wie auch weitere Phasen 40 des Update-Prozesses koordiniert werden können, indem zwischen oder am Ende einer jeweiligen Phase 40 alle Update-Module 17 und/oder alle Servermodule 23 auf die Freigabe der nächsten Phase 40 durch das Steuermodul 20 warten. So kann in einer Phase P1 durch das Steuermodul 20 der Empfang der Konfigurationsdaten 21 vorgesehen sein und die Ermittlung oder Analyse erfolgen, welches Servermodul 23 instruiert oder angesteuert werden muss. In einer zweiten Phase P2 kann das Herunterladen oder der Download der Update-Datenpakete 22 durch die Servermodule 23 erfolgen. Diese beiden Phasen P1, P2 können während einer Betriebsphase 41 des Kraftfahrzeugs 10, also während der Benutzung des Kraftfahrzeugs 10 durch einen Nutzer oder Fahrer, erfolgen. Es kann auch das bereits beschriebene Schreiben in eine inaktive Partition erfolgen, weil die den Betrieb der aktiven Partition unbeeinträchtigt lässt. Sind dann alle Servermodule 23 in der beschriebenen Weise bereit für das Update, also mit Update-Datenpaketen 22 versorgt, so kann während einer Parkphase 42 in einer Phase P3 die Installation und das Update in den Laufzeitumgebungen 16 in der beschriebenen Weise erfolgen.

In einer Phase P4 kann die Verifikation und die Freigabe der neuen Softwarestände in der beschriebenen Weise durch das Steuermodul 20 zentral erfolgen, damit alle Laufzeitumgebungen beim nächsten Fahrzeugstart gleichzeitig mit dem neuen Softwarestand starten.

Aufgrund der unterschiedlichen Domänen eines Fahrzeugs (u.a. Fahrwerk, Antrieb, Infotainment und Connectivity) und der Datengrößen für SW-Updates von hoch integrierten Steuergeräten wird ein SW-Update Mechanismus implementiert - bei dem die Update-Daten vor dem Update im Fahrzeug nicht zentral zwischengespeichert werden sondern direkt auf den Zielsteuergeräten. Bei dem verschiedene Update Konzepte aus Infotainment, Mobilfunk und Automotiv kombiniert werden können. Die Erfindung besteht aus einer zentralen Ablaufsteuerung (Orchestrierung) in Kombination mit dezentralen Ablaufsteuerungskomponenten auf den Zielsteuergeräten selbst oder in größter möglicher Nähe zu den Zielsteuergeräten. Die dezentrale Ablaufsteuerung übernimmt dabei die Orchestrierung, Datenübertragung und Ablage auf den Zielsteuergeräten ohne zwingende Zwischenablage auf einem Zentralsteuergerät. Dadurch wird eine effektive Datenverteilung und eine auf die Zielsteuergeräte hin optimierte und Fehler robuste Updatemöglichkeit geschaffen. Die Kommunikation zwischen den Komponenten der Lösung übernehmen ein Steuerkanal (Control Plane) mit einem auf Steuerungsdaten optimierten Übertragungsprotokoll und einem Datenkanal (Data Plane) für die Übertragung der benötigten Massendaten (Update Pakete). Die Lösung erlaubt die Übertragung und Einspielung von Updates während der Fahrt auf Steuergeräten die dafür vorgesehen sind und führt nur notwendigste Operationen während der Standzeit des Fahrzeugs durch in deren Zeit das Fahrzeug dem Nutzer nicht zur Verfügung steht. Die Lösung erlaubt das Update sowohl in Produktion, in der Werkstatt und während der Nutzung des Fahrzeugs. Die Lösung erlaubt es Update Konzepte aus Infotainment, Mobilfunk und Automotiv in einem Fahrzeug zu kombinieren und im Rahmen eines Gesamtfahrzeug-Updates upzudaten.

Im Folgenden ist eine besonders bevorzugte Ausführungsform beschrieben.

Die Meta-Daten oder Konfigurationsdaten für das fahrzeugweite Gesamt-Update aller der Laufzeitumgebungen werden dem Kraftfahrzeug zur Verfügung gestellt und in z.B. einem zentralen Update-Modul der Steuerschaltung analysiert.
- Update-Umfänge für kleine Steuergeräte werden vom zentralen Update-Modul selbst bearbeitet.
- Update-Umfänge für ein hochintegriertes Steuergerät (d.h. mit zumindest einer Laufzeitumgebung, z.B. Linux-Betriebssystem und/oder Android) werden vom zentralen Update-Modul zur Bearbeitung an die hochintegrierten Steuergeräte weitergegeben.

Die hochintegrierten Steuergeräte analysieren ihrerseits ihren Update-Auftrag selbst. Dabei werden bevorzugt die Meta-Daten der/des steuergerätespezifischen Update-System(e) mit den Meta-Daten des Update-Auftrags verglichen.

Um die Interaktion zwischen dem zentralen Update-Modul und dem steuergerätespezifischen Update-System zu gewährleisten wird ein Interface Mechanismus verwendet: Auf den Hochintegrierten Steuergeräten muss ein Lokales Update Server-Modul integriert werden das einerseits die Kommunikation mit dem zentralen Update-Modul herstellt. Und andererseits über Interfaces mit dem steuergerätespezifischen Update-Mechanismus des laufzeitumgebungseigenen Update-Modul kommuniziert. Über diesen Mechanismus informiert das zentrale Update-Modul das steuergerätespezifische Update-Verfahren über die aktuellen Phasen des Updates und bekommt den aktuellen Status steuergerätespezifischen Updates zurückmeldet (Kontrollkanal).

Der Download der Update-Daten in das hochintegrierte Steuergerät erfolgt ebenfalls über das Lokale Update Servermodul. Nach einer Analyse der Metadaten und dem Abgleich mit den vom steuergerätespezifischen Update-Mechanismus benötigten Dateien, lädt es diese aus dem Backend auf das Fahrzeug herunter und stellt sie nach erfolgreicher Konsistenzprüfung dem steuergerätespezifischen Update-Mechanismus des Update-Moduls der Laufzeitumgebung zur Verfügung (Datenkanal), das es dann installiert.

Der Ablauf des Gesamtfahrzeug-Update ist in verschiedene Phasen unterteilt, diese werden von zentralen Update-Modul gesteuert und über die lokalen Update-Module an die steuergerätespezifischen Update-Mechanismen kommuniziert (siehe Fig. 2):
- Analysephase: Abgleich der Meta-Daten aus dem Backend und dem Steuergerät
- Download: Download der benötigten Daten in das Fahrzeug und abhängig vom Steuergerätespezifischen Update Verfahren:
   --- Direkte Installation in den inaktiven Speicherbereich (zur späteren Aktivierung - A/B Konzept)
   --- Vorhalt für späteres Update in der Update-Phase (Single-Bank-Konzept)
- Installation/Update: Nach Herstellung eines sicheren Fahrzeugzustands
   --- Aktivierung der Inaktiven Partition (A/B Konzept)
   --- Bereinigung und Installation von SW-Anteilen, die nur im sicheren Fahrzeugzustand installierbar sind (Single-Bank-Konzept)
- Verifikation des Updates:
   --- Rollback bei Fehlern
   --- Verriegelung der Software im Gutfall und Freigabe des Fahrzeugs

Insgesamt zeigen die Beispiele, wie verschiedene Update-Mechanismen in ein Gesamtfahrzeugupdate integriert werden können.

## Patentansprüche

1. Verfahren zum Betreiben eines Kraftfahrzeugs (10), wobei in dem Kraftfahrzeug (10) in mehreren Laufzeitumgebungen (16), die insgesamt gemeinsam in einem Steuergerät oder auf mehrere Steuergeräte (13, 15) verteilt installiert sind, jeweils ein lokales, internes Update-Modul (17) betrieben wird, das für die jeweilige Laufzeitumgebung (16) aus einer jeweiligen umgebungsspezifischen Update-Datenquelle ein Update-Datenpaket eines jeweiligen neuen Softwarestands herunterlädt und damit in der Laufzeitumgebung (16) eine lokale Updateroutine durchführt und, falls eine vorbestimmte Prüfroutine (33) eine fehlerfreie Durchführung der jeweiligen Updateroutine signalisiert, die jeweilige Laufzeitumgebung (16) mit dem neuen Softwarestand in Betrieb genommen wird,
**dadurch gekennzeichnet, dass**
in dem Kraftfahrzeug (10) durch ein zentrales Steuermodul (20) aus einem fahrzeugexternen Backend-Server (11) Konfigurationsdaten (21), die für die Laufzeitumgebungen (16) abgestimmte Softwarestände angeben, empfangen werden, und das zentrale Steuermodul (20) mehrere unterschiedliche, in dem Kraftfahrzeug (10) bereitgestellte Servermodule (23), von denen jedem eine oder einige der Laufzeitumgebungen (16) zugeordnet sind und von denen jedes auf das jeweilige interne Update-Modul (17) derjenigen Laufzeitumgebung (16), die ihm zugeordnet ist, abgestimmt ist, ansteuert, damit das jeweilige Servermodul (23) das Update-Datenpaket des jeweiligen Softwarestands gemäß den Konfigurationsdaten (21) für die jeweilige zugeordnete Laufzeitumgebung (16) aus einer fahrzeugexternen Datenquelle herunterlädt, und das jeweilige Servermodul (23) als fahrzeuginterne Update-Datenquelle für die jeweilige zugeordnete Laufzeitumgebung (16) betrieben wird.

2. Verfahren nach Anspruch 1, wobei das jeweilige Update-Modul (17) ausschließlich bei dem lokalen Servermodul (23), dem es zugeordnet ist, anfragt oder von diesem benachrichtigt wird, ob ein neuer Softwarestand und/oder welcher neue Softwarestand verfügbar ist, und bei gegebener Verfügbarkeit das jeweilige Update-Datenpaket aus dem Servermodul (23) herunterlädt und für eine Installation bereithält.

3. Verfahren nach einem der vorhergehenden Ansprüche, wobei die lokalen Updateroutinen der Laufzeitumgebungen (16) in Abhängigkeit von einem Freigabesignal (26) des zentralen Steuermoduls (20) gestartet werden.

4. Verfahren nach Anspruch 3, wobei das zentrale Steuermodul (20) das Freigabesignal (26) erzeugt, falls erkannt wird, dass sich das Kraftfahrzeug (10) in einer Parkphase (42) befindet oder eine Parkphase (42) bevorsteht.

5. Verfahren nach einem der vorhergehenden Ansprüche, wobei das Herunterladen der Update-Datenpakete aus der jeweiligen fahrzeugexternen Datenquelle durch die Servermodule (23) während eines Fahrbetriebs des Kraftfahrzeugs (10) durchgeführt wird.

6. Verfahren nach einem der vorhergehenden Ansprüche, wobei die Prüfroutine (33) umfasst, dass das zentrale Steuermodul (20) ermittelt, dass aus jeder der Laufzeitumgebungen (16), die gemäß den Konfigurationsdaten (21) ein Update durchzuführen hat, ein Bestätigungssignal (30) des jeweiligen lokalen Update-Moduls (17) betreffend eine fehlerfreie Durchführung der Updateroutine empfangen wird und nur falls alle lokalen Durchführungen als fehlerfrei signalisiert wurden, insgesamt eine fehlerfreie Durchführung signalisiert wird und der neue Softwarestand in Betrieb genommen wird.

7. Verfahren nach einem der vorhergehenden Ansprüche, wobei das jeweilige Update-Datenpaket durch die Updateroutine in einer inaktiven Partition (31, 32) der Laufzeitumgebung (16) abgespeichert und/oder installiert wird, während ein aktuell installierter und bisher genutzter Softwarestand als ausführbar beibehalten wird.

8. Verfahren nach einem der vorhergehenden Ansprüche, wobei das Herunterladen der Update-Datenpakte und deren Installation in mehrere Phasen (40) eingeteilt ist, deren Übergang für alle Laufzeitumgebungen (16) durch das zentrale Steuermodul (20) gemeinsam ausgelöst wird.

9. Verfahren nach einem der vorhergehenden Ansprüche, wobei eines oder einige oder jedes der Servermodule (23) in demselben Steuergerät (13, 15), in welchem auch die jeweils zugeordnete Laufzeitumgebung (16) angeordnet ist, betrieben wird, und/oder wobei eines oder einige der Servermodule (23) in demselben Steuergerät (13, 15), das auch das zentrale Steuermodul (20) betreibt, betrieben wird, und/oder wobei eines oder einige oder jedes der Servermodule (23) in einem jeweiligen Steuergerät (13, 15) betrieben wird, das die schnellste Datenanbindung zu demjenigen Steuergerät (13, 15), das die jeweils zugeordnete Laufzeitumgebung (16) aufweist, betrieben wird.

10. Kraftfahrzeug (10), das dazu eingerichtet ist, ein Verfahren nach einem der vorhergehenden Ansprüche durchzuführen und hierzu eine Prozessorschaltung, die ein zentrales Steuermodul (20) gemäß dem Verfahren aufweist, und zumindest ein Steuergerät (13, 15), das jeweils zumindest ein Servermodul (23) gemäß dem Verfahren, sowie mehrere, eine jeweilige eigene, integriertes Updateroutine aufweisende Laufzeitumgebungen (16) gemäß dem Verfahren aufweist, umfasst.

## Claims

1. A method for operating a motor vehicle (10), in which, in the motor vehicle (10), in each of a plurality of runtime environments (16) which are installed altogether jointly in one control device or so as to be distributed between a plurality of control devices (13, 15), a local internal update module (17) is operated which downloads an update data packet of a relevant new software version from a relevant environment-specific update data source for the relevant runtime environment (16) and thus carries out a local update routine in the runtime environment (16) and, if a predetermined check routine (33) indicates that the relevant update routine has been carried out without errors, the relevant runtime environment (16) is put into operation with the new software version, **characterized in that**, in the motor vehicle (10), configuration data (21) representing the software versions adjusted for the runtime environment (16) are received from a backend server (11) outside the vehicle by a central control module (20), and the central control module (20) actuates a plurality of different server modules (23) provided in the motor vehicle (10), each of which is assigned to one or some of the runtime environments (16) and is adjusted to the relevant internal update module (17) of the runtime environment (16) assigned to it, such that the relevant server module (23) downloads the update data packet of the relevant software version in accordance with the configuration data (21) for the relevant assigned runtime environment (16) from a data source outside the vehicle, and the relevant server module (23) is operated as an on-board update data source for the relevant assigned runtime environment (16).

2. The method according to claim 1, wherein the relevant update module (17) only queries the local server module (23) to which it is assigned, or it is reported by said server module whether a new software version and/or which new software version is available, and if it is available, downloads the relevant update data packet from the server module (23) and keeps it ready for installation.

3. The method according to any of the preceding claims, wherein the local update routines of the runtime environments (16) are started on the basis of an enable signal (26) from the central control module (20).

4. The method according to claim 3, wherein the central control module (20) generates the enable signal (26) if it is identified that the motor vehicle (10) is in a parking phase (42) or is about to be in a parking phase (42).

5. The method according to any of the preceding claims, wherein downloading the update data packets from the relevant data source outside the vehicle is carried out by the server modules (23) during driving operation of the motor vehicle (10).

6. The method according to any of the preceding claims, wherein the check routine (33) includes the fact that the central control module (20) determines that a confirmation signal (30) from the relevant local update module (17) relating to the update routine being carried out without errors is received from each of the runtime environments (16) that has to carry out an update according to the configuration data (21) and, only if all the update routines locally carried out have been indicated as being without errors is it indicated that the update routines as a whole have been carried out without errors and the new software version is put into operation.

7. The method according to any of the preceding claims, wherein the relevant update data packet is stored and/or installed in an inactive partition (31, 32) of the runtime environment (16) by the update routine, while a currently installed and previously used software version is retained as being executable.

8. The method according to any of the preceding claims, wherein the download of the update data packets and their installation are split into a plurality of phases (40), the transition between which is initiated jointly by the central control module (20) for all the runtime environments (16).

9. The method according to any of the preceding claims, wherein one or some or each of the server modules (23) is/are operated in the same control device (13, 15) in which the respectively assigned runtime environment (16) is also arranged, and/or wherein one or some of the server modules (23) is/are operated in the same control device (13, 15) which also operates the central control module (20), and/or wherein one or some or each of the server modules (23) is/are operated in a relevant control device (13, 15) which is operated with the fastest data connection to the control device (13, 15) which comprises the respectively assigned runtime environment (16).

10. A motor vehicle (10) which is configured to carry out a method according to any of the preceding claims and comprises, for this purpose, a processor circuit, which comprises a central control module (20) according to the method, and at least one control device (13, 15), which comprises at least one server module (23) according to the method in each case, and a plurality of runtime environments (16) according to the method which each comprise a separate, integrated update routine.

## Revendications

1. Procédé de fonctionnement d'un véhicule à moteur (10), dans lequel, dans le véhicule à moteur (10), dans chacun d'une pluralité d'environnements d'exécution (16) qui sont installés en totalité conjointement dans un dispositif de commande ou d'une manière distribuée parmi une pluralité de dispositifs de commande (13, 15), un module (17) de mise à jour interne local est mis en œuvre, lequel télécharge un paquet de données de mise à jour d'une nouvelle version logicielle respective à partir d'une source de données de mise à jour spécifique à l'environnement respective pour l'environnement d'exécution (16) respectif et exécute ainsi une routine de mise à jour locale dans l'environnement d'exécution (16) et, si une routine de vérification (33) prédéterminée signale une exécution sans erreur de la routine de mise à jour respective, l'environnement d'exécution (16) respectif est mis en service avec la nouvelle version logicielle,
**caractérisé en ce que**
des données de configuration (21) spécifiant les versions logicielles adaptées pour les environnements d'exécution (16) sont reçues dans le véhicule à moteur (10) par l'intermédiaire d'un module (20) de commande central à partir d'un serveur dorsal externe (11), et le module (20) de commande central commande plusieurs modules serveurs (23) différents, intégrés au véhicule à moteur (10), qui sont tous associés à un ou plusieurs environnements d'exécution (16) et qui sont tous adaptés au module (17) de mise à jour interne respectif de l'environnement d'exécution (16) qui leur est associé, de sorte que le module serveur (23) respectif télécharge le package de données de mise à jour de la version logicielle respective selon les données de configuration (21) pour l'environnement d'exécution (16) associé respectif à partir d'une source de données externe au véhicule, et le module serveur (23) respectif est mis en œuvre en tant que source de données de mise à jour interne au véhicule pour l'environnement d'exécution (16) associé respectif.

2. Procédé selon la revendication 1, dans lequel le module (17) de mise à jour respectif interroge exclusivement le module de serveur (23) local auquel il est associé, ou est informé par celui-ci, en ce qui concerne la disponibilité d'une nouvelle version logicielle et/ou quelle nouvelle version logicielle est disponible, et, en cas de disponibilité, télécharge le paquet de données de mise à jour respectif à partir du module serveur (23) et le prépare pour une installation.

3. Procédé selon l'une des revendications précédentes, dans lequel les routines de mise à jour locales des environnements d'exécution (16) sont lancées en fonction d'un signal de validation (26) du module (20) de commande central.

4. Procédé selon la revendication 3, dans lequel le module (20) de commande central génère le signal de validation (26) s'il détecte que le véhicule à moteur (10) se trouve en phase de stationnement (42) ou qu'une phase de stationnement (42) est imminente.

5. Procédé selon l'une des revendications précédentes, dans lequel le téléchargement des paquets de données de mise à jour à partir de la source de données externe au véhicule respective est réalisé par les modules serveurs (23) pendant une opération de conduite du véhicule à moteur (10).

6. Procédé selon l'une des revendications précédentes, dans lequel la routine de vérification (33) comprend le fait que le module (20) de commande central détermine qu'un signal de confirmation (30) du module (17) de mise à jour local respectif concernant une exécution sans erreur de la routine de mise à jour est reçu de chacun des environnements d'exécution (16) qui, selon les données de configuration (21), doit effectuer une mise à jour, et, uniquement si toutes les exécutions locales ont été signalées comme étant sans erreur, une exécution sans erreur est signalée dans son ensemble et la nouvelle version du logiciel est mise en service.

7. Procédé selon l'une des revendications précédentes, dans lequel le paquet de données de mise à jour respectif est enregistré et/ou installé par la routine de mise à jour dans une partition inactive (31, 32) de l'environnement d'exécution (16), tandis qu'une version logicielle actuellement installée et utilisée jusqu'à présent est conservée comme exécutable.

8. Procédé selon l'une des revendications précédentes, dans lequel le téléchargement des paquets de données de mise à jour et leur installation sont divisés en plusieurs phases (40), dont la transition est déclenchée conjointement pour tous les environnements d'exécution (16) par le module (20) de commande central.

9. Procédé selon l'une des revendications précédentes, dans lequel un ou certains ou tous les modules serveurs (23) sont mis en œuvre dans le même appareil de commande (13, 15) dans lequel est également disposé l'environnement d'exécution (16) respectif associé, et/ou dans lequel un ou certains des modules serveurs (23) sont mis en œuvre dans le même appareil de commande (13, 15) qui met en œuvre également le module (20) de commande central, et/ou dans lequel un ou certains ou tous les modules serveurs (23) sont mis en œuvre dans un appareil de commande (13, 15) respectif qui met en œuvre la connexion de données la plus rapide vers l'appareil de commande (13, 15) qui présente l'environnement d'exécution (16) respectif attribué.

10. Véhicule à moteur (10) conçu pour exécuter un procédé selon l'une des revendications précédentes et comprend à cet effet un circuit processeur qui comprend un module (20) de commande central selon le procédé et au moins un appareil de commande (13, 15) comprenant chacun au moins un module serveur (23) selon le procédé, ainsi qu'une pluralité d'environnements d'exécution (16) selon le procédé, présentant chacun leur propre routine de mise à jour intégrée.
